# EUROPEAN PATENT SPECIFICATION

(11) **EP 3 657 879 B1**
(45) Date of publication and mention of the grant of the patent: **07.10.2026**
(21) Application number: 19218518.9
(22) Date of filing: 10.01.2011
(51) Int. Cl.: H04W 72/23, H04L 5/00, H04B 7/024

(54) **SUPPORTING DYNAMIC MULTIPOINT COMMUNICATION CONFIGURATION**
UNTERSTÜTZUNG EINER DYNAMISCHEN MEHRPUNKTKOMMUNIKATIONSKONFIGURATION
SUPPORT DE CONFIGURATION DE COMMUNICATION MULTIPOINT DYNAMIQUE

(43) Date of publication of application: 27.05.2020
(62) Document number(s) of the earlier application(s) in accordance with Art. 76 EPC: 11855352.8 / 2 664 204
(73) Proprietor: Beijing Xiaomi Mobile Software Co., Ltd., Beijing 100085 (CN)
(72) Inventor: LUNTTILA, Timo Erkki, 02200 Espoo (FI); WANG, Xiaoyi, Beijing, 100013 (CN); SKOV, Peter, Beijing, 100044 (CN)
(74) Representative: Dehns Germany Partnerschaft mbB

(56) References cited:
- EP-A1- 2 410 685
- EP-A1- 2 445 260
- WO-A1-2010/107013
- WO-A1-2010/146781
- TOKYO INSTITUTE OF TECHNOLOGY ET AL: "Distributed Dynamic CoMP for LTE-Advanced", 3GPP DRAFT; R1-093608 DISTRIBUTED DYNAMIC COMP FOR LTE ADVANCED (REVISED FROM R1-093081), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090824, 24 August 2009 (2009-08-24), XP050388177
- HITACHI ET AL: "An issue on multi-cell antenna allocation for joint approaches", 3GPP DRAFT; R1-090598, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090204, 4 February 2009 (2009-02-04), XP050318484

## Description

### Field of the Invention

The present invention relates to an apparatus, method and computer program product for supporting dynamic multipoint communication configuration stations. In particular, the present invention relates to an apparatus, method and computer program product for supporting dynamic multipoint communication configuration in evolved Node Bs and user equipment.

### Related background Art

Prior art which is related to this technical field can e.g. be found by the technical specifications of the 3GPP 36 series standard. Particular reference is made to T3 36.814 (current version: 9.0.0) of the 3GPP.

EP 2 445 260 A1 discloses that to provide radio communications using downlink reference signal structures suitable for antenna virtualization, non-cooperative communication is supported for communication between the base station and a terminal, and cooperative communication is supported for communication between the base station and another terminal. Cooperating base stations each provides its own reference signal configuration.

EP 2 410 685 A1 discloses normal structured and low-density structured Common Reference Symbols (CRS) transmissions from a base station to terminals.

The following meanings for the abbreviations used in this specification apply:
- 3^{rd}: Generation
- 3^{rd}: Generation Partnership Project
- CoMP:: Coordinated Multi-Point Transmission
- CRS:: Common Reference Symbols
- CSI-RS:: Channel State Information Reference Symbols
- CQI:: Channel Quality Indicator
- DCI:: Downlink Control Information
- DL:: Downlink
- DM RS:: Demodulation Reference Symbols
- DRS:: Dedicated (UE-Specific) Reference Symbols
- eNB:: evolved Node B (base station)
- ID:: Identifier
- LTE:: Long Term Evolution
- LTE-A:: Long Term Evolution Advanced
- PDCCH:: Physical Downlink Control Channel
- PDSCH:: Physical Downlink Shared Channel
- PMI:: Precoding Matrix Indicator
- RI:: Rank Indicator
- RRC:: Radio Resource Control
- RS:: Reference Signal
- TM:: Transmission Mode
- TX:: Transmit(ter)
- UE:: User Equipment

Recently, in LTE-Advanced related standardization meetings it is under discussion whether data transmission from multiple cells towards one user should be supported. Such data transmission from multiple cells towards one user is also called Coordinated Multipoint Transmission (CoMP). Since the present discussion merely focuses on rather general aspects, there is a need for detail solutions related to the technical implementation.

### Summary of the Invention

The invention is set out in the appended set of claims. It is an object of the present invention to provide such detail solution which in the present case is related to supporting dynamic multipoint communication configuration.

According to a first aspect of the present invention, there is provided an apparatus comprising the features of claim 1.

Modifications of the first aspect may be as follows.

The two neighboring cells with overlapping coverage area
can each be served by the same evolved Node B.

The second communication transmission set can comprise
information selected from the group comprising a vertical shift in the common reference signal patterns between the neighboring cells, the identities of the neighboring cells and a transmission sequence of the neighboring cells.

The second communication transmission set can include
information to trigger the user equipment using an operation mode in which antenna ports of the neighboring sector are considered virtual antenna ports consecutively adding to the antenna ports of the serving sector.

According to a second aspect of the present invention, there is provided a user equipment comprising the features of claim 5.

According to a third aspect of the present invention, there is provided an evolved node B comprising the features of claim 6.

According to a fourth aspect of the present invention, there is provided a method comprising the features of claim 7..

Modifications of the fourth aspect may be as follows.

The two neighboring cells with overlapping coverage area can each be served by the same base station.

The second communication transmission set can comprise information selected from the group comprising a vertical shift in the common reference signal patterns between the neighboring cells, the identities of the neighboring cells and a transmission sequence of the neighboring cells.

The second communication transmission set can include information to trigger the terminal using an operation mode in which antenna ports of the neighboring sector are considered virtual antenna ports consecutively adding to the antenna ports of the serving sector.

According to a fifth aspect of the present invention, there is provided a non-transitory computer program product comprising the features of claim 11.

### Brief Description of the Drawings

The above and otherobjects, features, details and advantages will become more fully apparent from the following detailed description of the preferred embodiments 15 which is to be taken in conjunction with the appended drawings, in which:
- Fig. 1: shows an apparatus according to certain embodiments of the present invention;
- Fig. 2: shows a flow chart illustrating a method according to certain embodiments of the present invention;
- Fig. 3: shows an example for the CRS collision issue in CoMP transmission;
- Fig. 4: illustrates a simple intra-site CoMP operation between two co-located cells, two antennas each; and
- Fig.: 5 illustrates anexample in which a user equipmenttreats antenna ports from another sector as virtual antenna ports in accordance with certain embodiments of the present invention.

### Detailed Description of the preferred Embodiments

In the following, description is made to what are presently considered to be preferred embodiments of the present invention. It is to be understood, however, that the description is given by way of example only, and that the described embodiments are by no means to be understood as limiting the present invention thereto.

For example, for illustration purposes, in some of the following exemplary embodiments, supporting dynamic multipoint communication configuration in the context of LTE-Advanced is described in order to illustrate a solution to the needs of the 3GPP. However, it should be appreciated that these exemplary embodiments are not limited for use among this particular type of wireless communication system, and according to further exemplary embodiments, the present invention can be applied also to other types of cellular- based communication systems and access networks in which the feature of multipoint communication can be present.

Though, certain embodiments of the present invention relate to 3GPP LTE-Advanced. In more detail, certain embodiments of the present invention are related to the configuration of an LTE-Advanced eNB and components thereof as well as of an LTE-Advanced UE and components thereof, or the like.

However, as indicated above, the present invention is not limited to eNB and UE, but other embodiments of the present invention are related to general base station nodes and terminal nodes, respectively, and components thereof.

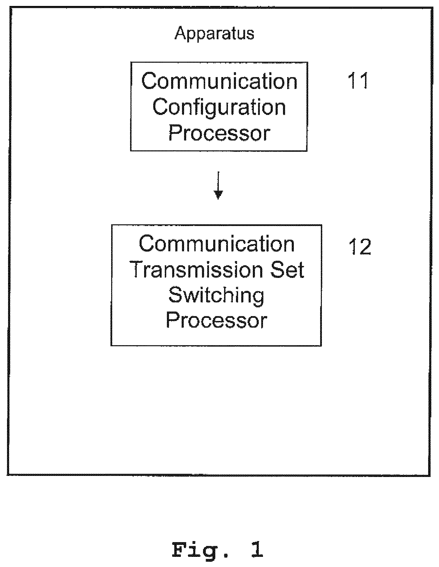

Fig. 1 shows a principle configuration of an example for an apparatus according to certain embodiments of the present invention. One option for implementing this example for an apparatus according to certain embodiments of the present invention would be a component in an evolved Node B according to LTE-Advanced, while another option for implementing this example would be a component in a user equipment according to LTE-Advanced.

Specifically, as shown in Fig. 1, the example for an apparatus comprises a communication configuration processor (11) configured to define at least two different communication transmission sets for cellular-based communication between base station and terminal, wherein the communication transmission sets are related to a downlink reference signal configuration; and a communication transmission set switching processor (12) configured to assign a communication transmission set for use in a current transmission related to the cellular-based communication.

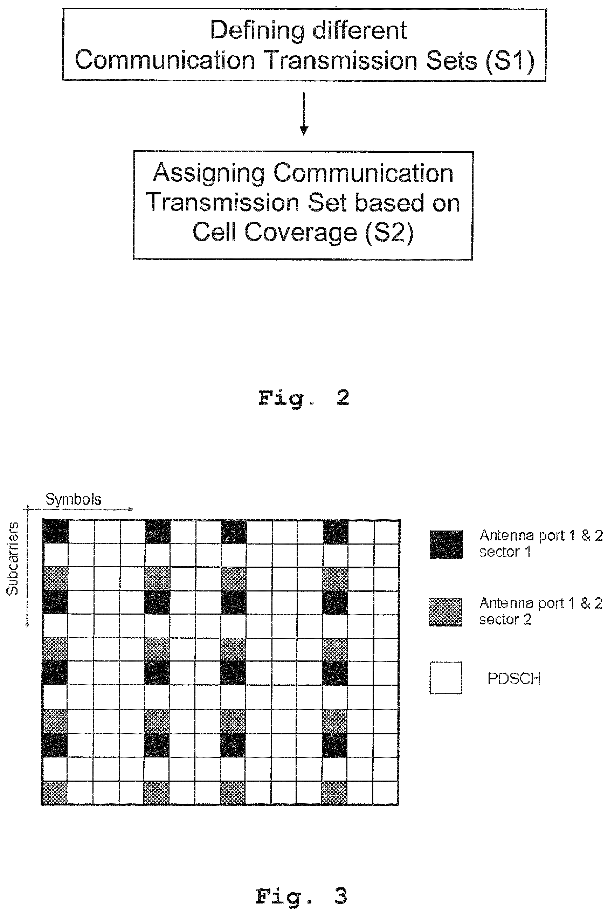

Fig. 2 shows a principle flowchart of an example for a method according to certain embodiments of the present invention. That is, as shown in Fig. 2, this method comprises defining (SI) at least two different communication transmission sets for cellular-based communication between base station and terminal, wherein the communication transmission sets are related to a downlink reference signal configuration; and assigning (S2) a communication transmission set for use in a current transmission related to the cellular-based communication.

One option for performing the example of a method according to certain embodiments of the present invention would be to use the apparatus as described above or a modification thereof which becomes apparent from the embodiments as described herein below.

According to certain embodiments of the present invention, a CoMP is enabled which allows a very fast communication (practically involving zero-delay) between the cooperating eNBs. Specifically, according to the signaling mechanisms of certain embodiments of the present invention a simple CoMP implementation for initial CoMP deployments is enabled without a need for high backhaul capacity with low latency. Moreover, according to certain embodiments of the present invention an implementation example is provided for the transmission of PDSCH from multiple cells in which data symbols are punctured to provide space for the common reference signal. Namely, when multi-cell transmission is enabled the number of reference signal positions that needs puncturing could change, for which no solution is known in the prior art.

Fig. 3 illustrates an example of such RS collision issue showing the sequence of symbols of subcarriers. If UE is performing CoMP and both sectors 1 and 2 are transmitting data to it, normally there is some vertical shift between the CRS patterns of neighbor sectors so that the UE has to do rate-matching or puncturing on the resource elements occupied by CRS from both sectors.

According to the specification TR 36.814 of the 3GPP an approach to this issue is considering to have transmission cells configured semi-statically.

However, as there are many different aspects to be taken into account when deciding for the scheduling of the UEs, a UE configured for multi-cell transmission might not always be transmitted to from multiple cells. With semi-static configuration this would lead to an increased overhead, since the UE, when transmitted to only from single cell, would still puncture the common reference signal positions from other cells.

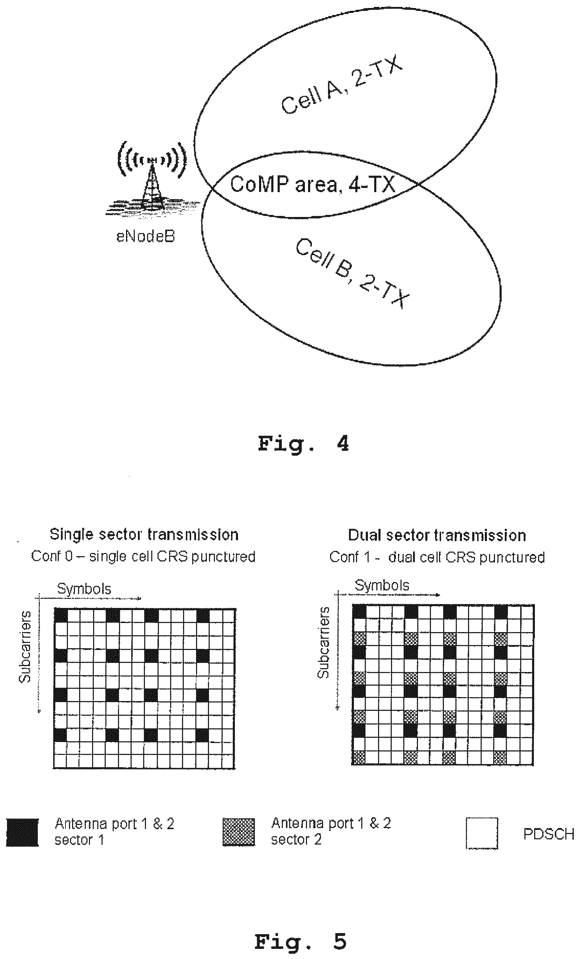

Hence, according to certain embodiments of the present invention, in the simple CoMP case where coordination takes place between the two cells (sectors) of a single eNB (see Fig. 4), the UE on the border area of the two cells can benefit from the CoMP transmission from all the four antennas of the two cells (two antennas per cell, indicated by 2-TX) .

Specifically, according to certain embodiments of the present invention, to support dynamic switching between single and multi-cell transmission, one or more of the following options may be implemented.

According to the invention, two or more higher layer ( RRC signaling) configurations are defined, where each configuration corresponds to a relevant semi-static configuration of the transmission set. For example, configuration 0 may correspond to single cell transmission (as defined in 3GPP Release 10) , and configuration 1 would mean a two sector transmission, i.e. a serving sector and one neighboring sector. In the latter case, the neighboring sector's information like CRS vertical shift, the transmission sequence, the cell-id, etc. are included in the configuration and is shared between eNB and UE.

According to the invention, a signaling in the DL assignment by e.g. using DCI is used to switch between the configurations. Such signaling could be established by reinterpretation of the existing DL assignment fields or by adding new bits. Also a new type of DL assignment can be defined for this purpose. The DL assignment may be present in only the UE-specific PDCCH search space or also in the common search space. Depending on the signaling the UE can correctly interpret e.g. the PMI field in the DCI e.g. using 2-TX or 4-TX codebook.

In the case a dual-sector transmission is indicated with the DL assignment, the UE can consider the antenna ports from neighbor sectors as "virtual antenna ports", which are perhaps associated with different CRS/CSI-RS locations, etc As illustrated in Fig. 5, UE takes the antenna ports 1&2 from the neighboring cell as virtual antenna ports and treats them as antenna ports 3&4 (by consecutive adding to the antenna ports of the serving cell/sector) in the demodulation or in the CSI measurements. This allows for the eNB to use e.g. existing 4-TX antenna codebook and related procedures when deriving the CSI feedback for the CoMP operation.

The configurations could include details related to a reference signal configuration as follows:
In a DRS based transmission, DM RS sequences could be different between different configurations. The signaling in the DL assignment could then be combined with other DRS configuration related signaling in the DL assignment to derive the DM RS sequence.

In a CRS based transmission, multi-cell transmission based on CRS could be envisioned. As an example, UE could be configured with 4TX assignment and in case of single cell transmission the DL assignment is reinterpreted by the UE as 2TX. On the other hand, if dual cell transmission is indicated, 4TX demodulation is used (while other combinations are also possible). In this case, the UE needs all the information related to a configuration of the CRS in adjacent cell (power offsets, PCI, etc.) so that it can derive proper channel estimates. Moreover, UE could always use CSI-RS to derive the feedback (CQI, PMI, RI, single/dual cell} as the adjacent cell's CRS could be badly interfered from PDSCH transmission in its own cell.

According to certain embodiments of the present invention, specific implementation examples could be established as described below:
Considering a case where each sector has two TX antenna ports and two transmission sets have been configured for the UE (for illustration purposes, reference is again made to Fig. 5:
- Config.O corresponds to single sector transmission (where sector 1 is the serving sector of the UE).
- Config.I corresponds to dual-sector transmission (including sector 1 and sector 2), and all the relevant information on the reference signals of sector 2 are included.

When the UE is configured in a DRS based TX mode, e.g. Transmission Mode 9, the corresponding DCI format has e.g. 1 bit (explicitly or implicitly) indicating which configuration is used for current DL assignment. If it indicates Config.O, then UE follows single cell 2TX transmission. If it indicates dual-cell transmission, the UE assumes there are four TX antenna ports for the transmission and up to four layers can be transmitted. In this case the UE does rate-matching of the received data around the CRS locations for both sector 1 and sector 2.

When the UE is configured in CRS based TX mode, the corresponding DCI format may still have 1 bit to indicate which configuration is to be used. If the DL assignment indicates config.I, the UE knows 4TX transmission is applied, and it considers antennas from the neighbor sector as virtual antenna ports and takes into account the corresponding CRS locations.

Thus, as is apparent from the above description of the preferred embodiments of the present invention, certain embodiments can achieve the following advantages:
DL CoMP can be introduced into LTE Release 11 in a most simple way. Further, it is possible to re-use LTE Release 8 codebooks and transmission schemes to a large extent {both open loop and closed loop). Still further, the proposed dynamic switching between single and multi-cell transmission makes it easier to harvest gains for the CoMP users. Eventually, the system impact (both related to standardization and implementation) is minimized, making a cost-effective introduction of the above features feasible.

According to the above description, it should thus be apparent that exemplary embodiments of the present invention provide, for example from the perspective of a network element such as an evolved Node B (eNB) and a user equipment, respectively, or a component thereof, an apparatus embodying the same, a method for controlling and/or operating the same, and computer program(s) controlling and/or operating the same as well as mediums carrying such computer program(s) and forming computer program product(s).

For example, described above are apparatuses, methods and computer program products capable of supporting dynamic multipoint communication configuration.

Implementations of any of the above described blocks, apparatuses, systems, techniques or methods include, as non limiting examples, implementations as hardware, software,
for example in connection with a digital signal processor, firmware, special purpose circuits or logic, general purpose hardware or controller or other computing devices, or some combination thereof.

What is described above is what is presently considered to be preferred embodiments of the present invention. However, as is apparent to the skilled reader, these are provided for illustrative purposes only and are in no way intended that the present invention is restricted thereto.

## Claims

1. An apparatus, comprising:
communication configuration means configured to define at least two different communication transmission sets for cellular-based communication between an evolved Node B and a user equipment, wherein the communication transmission sets are related to a downlink reference signal configuration; and wherein the at least two different communication transmission sets comprises a first communication transmission set corresponding to a single cell transmission and a second communication transmission set corresponding to a transmission involving two neighboring cells with overlapping coverage area forming a serving sector and a neighboring sector; and
communication transmission set switching means configured to assign a communication transmission set of the at least two different communication transmission sets for use in a current transmission in the cellular-based communication between the evolved Node B and the user equipment;
characterized
wherein the communication transmission set is based on a radio resource control signaling configuration, and wherein the communication transmission set switching means is configured to assign a communication transmission set based on downlink assignment signaling related to the current transmission.

2. The apparatus according to claim 1, wherein the two neighboring cells with overlapping coverage area are each served by a same evolved Node B.

3. The apparatus according to claim 1, wherein the second communication transmission set comprises information selected from a group comprising a vertical shift in common reference signal patterns between the neighboring cells, identities of the neighboring cells and a transmission sequence of the neighboring cells.

4. The apparatus according to claim 1, wherein the second communication transmission set includes information to trigger the user equipment using an operation mode in which antenna ports of the neighboring sector are considered virtual antenna ports consecutively adding to antenna ports of the serving sector.

5. A user equipment, comprising:
the apparatus according to any one of claims 1 to 4; and information sharing means configured to initiate sharing the communication transmission sets with an evolved Node B serving the user equipment.

6. An evolved Node B, comprising:
the apparatus according to any one of claims 1 to 4; and
information sharing means configured to initiate sharing the communication transmission sets with a user equipment served by the evolved Node B.

7. A method, comprising:
defining (S1), by an evolved Node B, at least two different communication transmission sets for cellular-based communication between an evolved Node B and a user equipment,
wherein the communication transmission sets are related to a downlink reference signal configuration; and wherein the at least two different communication transmission sets comprises a first communication transmission set corresponding to a single cell transmission and a second communication transmission set corresponding to a transmission involving two neighboring cells with overlapping coverage area forming a serving sector and a neighboring sector; and
assigning (S2), by the evolved Node B, a communication transmission set of the at least two different communication transmission sets for use in a current transmission in the cellular-based communication between the evolved Node B and the user equipment;
characterized
wherein defining the communication transmission set is based on a radio resource control signaling configuration, and wherein assigning a communication transmission set includes downlink assignment signaling related to the current transmission.

8. The method according to claim 7, wherein the two neighboring cells with overlapping coverage area are each served by a same evolved Node B.

9. The method according to claim 7, wherein the second communication transmission set comprises information selected from a group comprising a vertical shift in common reference signal patterns between the neighboring cells, identities of the neighboring cells and a transmission sequence of the neighboring cells.

10. The method according to claim 7, wherein the second communication transmission set includes information to trigger the user equipment using an operation mode in which antenna ports of the neighboring sector are considered virtual antenna ports consecutively adding to antenna ports of the serving sector.

11. A non-transitory computer program product comprising computer-executable components which perform, when the program is run on a computer:
defining at least two different communication transmission sets for cellular-based communication between an evolved Node B and a user equipment, wherein the communication transmission sets are related to a downlink reference signal configuration; and wherein the at least two different communication transmission sets comprises a first communication transmission set corresponding to a single cell transmission and a second communication transmission set corresponding to a transmission involving two neighboring cells with overlapping coverage area forming a serving sector and a neighboring sector; and
assigning a communication transmission set of the at least two different communication transmission sets for use in a current transmission in the cellular-based communication between the evolved Node B and the user equipment; wherein especially the computer program product is embodied as a non-transitory computer-readable storage medium;
characterized
wherein the communication transmission set is based on a radio resource control signaling configuration, and wherein the communication transmission set switching means is configured to assign a communication transmission set based on downlink assignment signaling related to the current transmission.

## Patentansprüche

1. Vorrichtung, umfassend:
Kommunikationskonfigurationsmittel, die konfiguriert sind, um mindestens zwei verschiedene Kommunikationsübertragungsgruppen für zellulärbasierte Kommunikation zwischen einem weiterentwickelten Node bzw. Knoten B und einer Benutzereinrichtung zu definieren, wobei die Kommunikationsübertragungsgruppen mit einer Downlink-Referenzsignal-Konfiguration zusammenhängen bzw. verwandt sind; und wobei die mindestens zwei verschiedenen Kommunikationsübertragungsgruppen eine erste Kommunikationsübertragungsgruppe, die einer Einzelzellenübertragung entspricht, und eine zweite Kommunikationsübertragungsgruppe umfassen, die einer Übertragung unter Beteiligung von zwei benachbarten Zellen mit überlappendem Abdeckungsbereich entspricht, die einen bedienenden Sektor und einen Nachbarsektor bilden; und Kommunikationsübertragungsgruppen-Schalt- bzw. Wechselmittel, die konfiguriert sind, um eine Kommunikationsübertragungsgruppe der mindestens zwei verschiedenen Kommunikationsübertragungsgruppen für die Verwendung in einer aktuellen Übertragung in der zellulärbasierten Kommunikation zwischen dem weiterentwickelten Node B und der Benutzereinrichtung zuzuweisen;
**dadurch gekennzeichnet, dass** die Kommunikationsübertragungsgruppe auf einer Funkressourcensteuerungs-Signalisierungskonfiguration basiert, und wobei die Kommunikationsübertragungsgruppen-Wechselmittel konfiguriert sind, um eine Kommunikationsübertragungsgruppe basierend auf Downlink-Zuweisungssignalisierung in Bezug auf die aktuelle Übertragung zuzuweisen.

2. Vorrichtung nach Anspruch 1, wobei die zwei benachbarten Zellen mit überlappendem Abdeckungsbereich jeweils von einem gleichen weiterentwickelten Node B bedient werden.

3. Vorrichtung nach Anspruch 1, wobei die zweite Kommunikationsübertragungsgruppe Informationen umfasst, die aus einer Gruppe ausgewählt sind, die eine vertikale Verschiebung in gemeinsamen Referenzsignal-Mustern zwischen den benachbarten Zellen, Identitäten der benachbarten Zellen und eine Übertragungssequenz der benachbarten Zellen umfasst.

4. Vorrichtung nach Anspruch 1, wobei die zweite Kommunikationsübertragungsgruppe Informationen enthält, um die Benutzereinrichtung zu veranlassen, einen Betriebsmodus zu verwenden, in dem Antennenports des Nachbarsektors als virtuelle Antennenports betrachtet werden, die aufeinanderfolgend zu Antennenports des bedienenden Sektors hinzugefügt werden.

5. Benutzereinrichtung, umfassend:
die Vorrichtung nach einem der Ansprüche 1 bis 4; und
Informationsfreigabemittel, die konfiguriert sind, um das Freigeben der Kommunikationsübertragungsgruppen mit einem weiterentwickelten Node B, der die Benutzereinrichtung bedient, zu initiieren.

6. Weiterentwickelter Node B, umfassend:
die Vorrichtung nach einem der Ansprüche 1 bis 4; und
Informationsfreigabemittel, die konfiguriert sind, um das Freigeben der Kommunikationsübertragungsgruppen mit einer Benutzereinrichtung, die von dem weiterentwickelten Node B bedient wird, zu initiieren.

7. Verfahren, umfassend:
Definieren (S1), durch einen weiterentwickelten Node B, von mindestens zwei verschiedenen Kommunikationsübertragungsgruppen für zellulärbasierte Kommunikation zwischen einem weiterentwickelten Node B und einer Benutzereinrichtung, wobei die Kommunikationsübertragungsgruppen mit einer Downlink-Referenzsignal-Konfiguration zusammenhängen bzw. verwandt sind; und wobei die mindestens zwei verschiedenen Kommunikationsübertragungsgruppen eine erste Kommunikationsübertragungsgruppe, die einer Einzelzellenübertragung entspricht, und eine zweite Kommunikationsübertragungsgruppe umfassen, die einer Übertragung unter Beteiligung von zwei benachbarten Zellen mit überlappendem Abdeckungsbereich entspricht, die einen bedienenden Sektor und einen Nachbarsektor bilden; und
Zuweisen (S2), durch den weiterentwickelten Node B, einer Kommunikationsübertragungsgruppe der mindestens zwei verschiedenen Kommunikationsübertragungsgruppen für die Verwendung in einer aktuellen Übertragung in der zellulärbasierten Kommunikation zwischen dem weiterentwickelten Node B und der Benutzereinrichtung;
**dadurch gekennzeichnet, dass** das Definieren der Kommunikationsübertragungsgruppe auf einer Funkressourcensteuerungs-Signalisierungskonfiguration basiert, und wobei das Zuweisen einer Kommunikationsübertragungsgruppe Downlink-Zuweisungssignalisierung in Bezug auf die aktuelle Übertragung umfasst.

8. Verfahren nach Anspruch 7, wobei die zwei benachbarten Zellen mit überlappendem Abdeckungsbereich jeweils von einem gleichen weiterentwickelten Node B bedient werden.

9. Verfahren nach Anspruch 7, wobei die zweite Kommunikationsübertragungsgruppe Informationen umfasst, die aus einer Gruppe ausgewählt sind, die eine vertikale Verschiebung in gemeinsamen Referenzsignal-Mustern zwischen den benachbarten Zellen, Identitäten der benachbarten Zellen und eine Übertragungssequenz der benachbarten Zellen umfasst.

10. Verfahren nach Anspruch 7, wobei die zweite Kommunikationsübertragungsgruppe Informationen enthält, um die Benutzereinrichtung zu veranlassen, einen Betriebsmodus zu verwenden, in dem Antennenports des Nachbarsektors als virtuelle Antennenports betrachtet werden, die aufeinanderfolgend zu Antennenports des bedienenden Sektors hinzugefügt werden.

11. Nicht-flüchtiges Computerprogrammprodukt, umfassend computerausführbare Komponenten, die, wenn das Programm auf einem Computer ausgeführt wird, Folgendes durchführen:
Definieren von mindestens zwei verschiedenen Kommunikationsübertragungsgruppen für zellulärbasierte Kommunikation zwischen einem weiterentwickelten Node B und einer Benutzereinrichtung, wobei die Kommunikationsübertragungsgruppen mit einer Downlink-Referenzsignal-Konfiguration zusammenhängen bzw. verwandt sind; und wobei die mindestens zwei verschiedenen Kommunikationsübertragungsgruppen eine erste Kommunikationsübertragungsgruppe, die einer Einzelzellenübertragung entspricht, und eine zweite Kommunikationsübertragungsgruppe umfassen, die einer Übertragung unter Beteiligung von zwei benachbarten Zellen mit überlappendem Abdeckungsbereich entspricht, die einen bedienenden Sektor und einen Nachbarsektor bilden; und
Zuweisen einer Kommunikationsübertragungsgruppe der mindestens zwei verschiedenen Kommunikationsübertragungsgruppen für die Verwendung in einer aktuellen Übertragung in der zellulärbasierten Kommunikation zwischen dem weiterentwickelten Node B und der Benutzereinrichtung; wobei das Computerprogrammprodukt insbesondere als nicht-flüchtiges computerlesbares Speichermedium verkörpert ist;
**dadurch gekennzeichnet, dass** die Kommunikationsübertragungsgruppe auf einer Funkressourcensteuerungs-Signalisierungskonfiguration basiert, und wobei die Kommunikationsübertragungsgruppen-Wechselmittel konfiguriert sind, um eine Kommunikationsübertragungsgruppe basierend auf Downlink-Zuweisungssignalisierung in Bezug auf die aktuelle Übertragung zuzuweisen.

## Revendications

1. Appareil, comprenant :
des moyens de configuration de communication configurés pour définir au moins deux ensembles de transmission de communication différents pour une communication basée sur des cellules entre un Node B évolué et un équipement utilisateur, dans lequel les ensembles de transmission de communication sont liés à une configuration de signal de référence en liaison descendante ; et dans lequel lesdits au moins deux ensembles de transmission de communication différents comprennent un premier ensemble de transmission de communication correspondant à une transmission à cellule unique et un deuxième ensemble de transmission de communication correspondant à une transmission impliquant deux cellules voisines avec une zone de couverture chevauchante formant un secteur de desserte et un secteur voisin ; et des moyens de commutation d'ensemble de transmission de communication configurés pour attribuer un ensemble de transmission de communication desdits au moins deux ensembles de transmission de communication différents pour une utilisation dans une transmission actuelle dans la communication basée sur des cellules entre le Node B évolué et l'équipement utilisateur ;
**caractérisé en ce que** l'ensemble de transmission de communication est basé sur une configuration de signalisation de contrôle des ressources radio, et dans lequel les moyens de commutation d'ensemble de transmission de communication sont configurés pour attribuer un ensemble de transmission de communication sur la base d'une signalisation d'attribution en liaison descendante liée à la transmission actuelle.

2. Appareil selon la revendication 1, dans lequel les deux cellules voisines avec une zone de couverture chevauchante sont chacune desservies par un même Node B évolué.

3. Appareil selon la revendication 1, dans lequel le deuxième ensemble de transmission de communication comprend des informations sélectionnées dans un groupe comprenant un décalage vertical dans des motifs de signal de référence communs entre les cellules voisines, des identités des cellules voisines et une séquence de transmission des cellules voisines.

4. Appareil selon la revendication 1, dans lequel le deuxième ensemble de transmission de communication inclut des informations pour déclencher l'équipement utilisateur afin d'utiliser un mode de fonctionnement dans lequel des ports d'antenne du secteur voisin sont considérés comme des ports d'antenne virtuels s'ajoutant consécutivement aux ports d'antenne du secteur de desserte.

5. Équipement utilisateur, comprenant :
l'appareil selon l'une quelconque des revendications 1 à 4 ; et
des moyens de partage d'informations configurés pour initier le partage des ensembles de transmission de communication avec un Node B évolué desservant l'équipement utilisateur.

6. Node B évolué, comprenant :
l'appareil selon l'une quelconque des revendications 1 à 4 ; et
des moyens de partage d'informations configurés pour initier le partage des ensembles de transmission de communication avec un équipement utilisateur desservi par le Node B évolué.

7. Procédé, comprenant :
la définition (S1), par un Node B évolué, d'au moins deux ensembles de transmission de communication différents pour une communication basée sur des cellules entre un Node B évolué et un équipement utilisateur, dans lequel les ensembles de transmission de communication sont liés à une configuration de signal de référence en liaison descendante ; et dans lequel lesdits au moins deux ensembles de transmission de communication différents comprennent un premier ensemble de transmission de communication correspondant à une transmission à cellule unique et un deuxième ensemble de transmission de communication correspondant à une transmission impliquant deux cellules voisines avec une zone de couverture chevauchante formant un secteur de desserte et un secteur voisin ; et
l'attribution (S2), par le Node B évolué, d'un ensemble de transmission de communication desdits au moins deux ensembles de transmission de communication différents pour une utilisation dans une transmission actuelle dans la communication basée sur des cellules entre le Node B évolué et l'équipement utilisateur ;
**caractérisé en ce que** la définition de l'ensemble de transmission de communication est basée sur une configuration de signalisation de contrôle des ressources radio, et dans lequel l'attribution d'un ensemble de transmission de communication inclut une signalisation d'attribution en liaison descendante liée à la transmission actuelle.

8. Procédé selon la revendication 7, dans lequel les deux cellules voisines avec une zone de couverture chevauchante sont chacune desservies par un même Node B évolué.

9. Procédé selon la revendication 7, dans lequel le deuxième ensemble de transmission de communication comprend des informations sélectionnées dans un groupe comprenant un décalage vertical dans des motifs de signal de référence communs entre les cellules voisines, des identités des cellules voisines et une séquence de transmission des cellules voisines.

10. Procédé selon la revendication 7, dans lequel le deuxième ensemble de transmission de communication inclut des informations pour déclencher l'équipement utilisateur afin d'utiliser un mode de fonctionnement dans lequel des ports d'antenne du secteur voisin sont considérés comme des ports d'antenne virtuels s'ajoutant consécutivement aux ports d'antenne du secteur de desserte.

11. Produit de programme informatique non transitoire comprenant des composants exécutables par ordinateur qui, lorsque le programme est exécuté sur un ordinateur, effectuent:
la définition d'au moins deux ensembles de transmission de communication différents pour une communication basée sur des cellules entre un Node B évolué et un équipement utilisateur, dans lequel les ensembles de transmission de communication sont liés à une configuration de signal de référence en liaison descendante ; et dans lequel lesdits au moins deux ensembles de transmission de communication différents comprennent un premier ensemble de transmission de communication correspondant à une transmission à cellule unique et un deuxième ensemble de transmission de communication correspondant à une transmission impliquant deux cellules voisines avec une zone de couverture chevauchante formant un secteur de desserte et un secteur voisin ; et
l'attribution d'un ensemble de transmission de communication desdits au moins deux ensembles de transmission de communication différents pour une utilisation dans une transmission actuelle dans la communication basée sur des cellules entre le Node B évolué et l'équipement utilisateur ; dans lequel le produit de programme informatique est notamment incarné sous la forme d'un support de stockage non transitoire lisible par ordinateur ;
**caractérisé en ce que** l'ensemble de transmission de communication est basé sur une configuration de signalisation de contrôle des ressources radio, et dans lequel les moyens de commutation d'ensemble de transmission de communication sont configurés pour attribuer un ensemble de transmission de communication sur la base d'une signalisation d'attribution en liaison descendante liée à la transmission actuelle.
